# EUROPEAN PATENT SPECIFICATION

(11) **EP 3 322 001 B1**
(45) Date of publication and mention of the grant of the patent: **18.12.2019**
(21) Application number: 17000395.8
(22) Date of filing: 10.03.2017
(51) Int. Cl.: H01M 2/06, H01M 2/30, H01M 2/34, H01M 2/20, H01M 2/26

(54) **SECONDARY BATTERY AND BATTERY MODULE**
SEKUNDÄRBATTERIE UND BATTERIEMODUL
BATTERIE SECONDAIRE ET MODULE DE BATTERIE

(30) Priority: 15.11.2016 CN 201611003991
(43) Date of publication of application: 16.05.2018
(73) Proprietor: Contemporary Amperex Technology Co., Limited, Jiaocheng District Ningde City Fujian 352100 (CN)
(72) Inventor: LIN, Yongshou, Ningde City, 352100 Fujian Province (CN); LI, Quankun, Ningde City, 352100 Fujian Province (CN)
(74) Representative: FARAGO Patentanwälte

(56) References cited:
- US-A1- 2011 177 387
- US-A1- 2012 263 976
- US-A1- 2014 193 675
- US-A1- 2014 272 491

## Description

### TECHNICAL FIELD

The present application relates to the field of energy storage device production technologies and, particularly, relates to a secondary battery and a battery module.

### BACKGROUND

In order to solve over-charging problem of EV hard shell battery, a general solution adopted in the industry is to cut off the main circuit before failure of the cell, so as to prevent the battery from being charged continuously, thereby ensure safety of the battery. A normal structure is: a current interrupting device is arranged in a main circuit in which a first terminal is electrically connected with an electrode assembly, a second terminal is always electrically insulated from the current interrupting device. When a battery is overcharged, gas is generated in the interior, the current interrupting device is activated when the internal pressure is increased to a certain value, so as to interrupt the electrical connection state between the first terminal and the electrode assembly, and prevent the battery from being charged.

However, except overcharging, in normal using process, gas may be generated due to an accidental internal short circuit, which will activate the current interrupting device, resulting in that the electrical connection state between the first terminal and the electrode assembly is interrupted, if a vehicle is in moving at that moment, since batteries in a battery module are connected in series, and since the first terminal is still insulated from the second terminal, may lead to that power supply of the whole battery module is interrupted, causing the vehicle be suddenly shut down, and may even result in serious accident.

US 2012 263976 A1 relates to a secondary battery including an electrode assembly including a first electrode, a second electrode, and a separator between the first and second electrodes; a first collecting part electrically connected to the first electrode; a second collecting part electrically connected to the second electrode; a case configured to receive the electrode assembly; a cap assembly including a cap plate configured to seal an opening of the case; and an auxiliary connection part electrically connected between the second collecting part and the cap plate. The second collecting part includes at least two fuse parts, a first extension part, and a second extension part connected to the second electrode.

### SUMMARY

The present application provides a secondary battery and a battery module, which can solve the above problems.

A first aspect of the present application provides a secondary battery, including a first terminal, a second terminal, a top cover plate, an electrode assembly, a connecting piece and a deformable plate, wherein
the electrode assembly includes a first electrode plate, a second electrode plate and a separator between the first electrode plate and the second electrode plate;
at least one of the first terminal and the second terminal is insulatedly arranged from the top cover plate; the connecting piece is electrically connected with the second terminal;
in a normal state, the first electrode plate is electrically connected with the first terminal through the deformable plate, and the second electrode plate is electrically connected with the second terminal;
when an internal pressure of the secondary battery exceeds a reference pressure, the deformable plate deforms so as to interrupt an electrical connection with the first electrode plate, and then the deformable plate after deforming is electrically connected with the connecting piece, so that the first terminal is electrically connected with the second terminal.

Preferably,
the second terminal is insulated from the top cover plate;
the first terminal is electrically connected with the top cover plate, and the connecting piece is insulated from the top cover plate;
a first through-hole is disposed on the top cover plate;
the deformable plate is attached to the top cover plate, and seals the first through-hole;
in a normal state, the first electrode plate is electrically connected with the first terminal through the deformable plate and the top cover plate, successively;
the connecting piece is located at a side of the top cover plate away from the electrode assembly, an end of the connecting piece is electrically connected with the second terminal, and the other end of the connecting piece, at least a part of which is disposed opposite to the first through-hole, extends toward the first terminal.

Preferably, the deformable plate includes a deformable portion and a first protrusion,
the deformable portion is a sheet-shaped ring structure, and an edge thereof is connected with the top cover plate;
the first protrusion is connected with the deformable portion, protrudes in a direction toward the connecting piece, and is disposed opposite to the part of the connecting piece opposite to the first through-hole.

Preferably, the first through-hole is a ladder hole, which includes a big hole and a small hole, and an edge of the deformable portion is connected with an inner wall of the big hole; the first protrusion extends into the small hole.

Preferably, the deformable plate further includes a second protrusion, the second protrusion is connected with the deformable portion, and protrudes toward a direction away from the first protrusion, in a normal state, the deformable portion is electrically connected with the first electrode plate through the second protrusion.

Preferably, further including a conductive plate,
in a normal state, the first electrode plate is electrically connected with the first terminal through the conductive plate and the deformable plate, successively;

when the internal pressure of the secondary battery exceeds the reference pressure, the deformable plate deforms to interrupt the conductive plate, so as to interrupt the electrical connection between the first terminal and the first electrode plate.

Preferably, the conductive plate includes a first conductive portion, a second conductive portion and a thickness reducing area,
the thickness reducing area is located between the first conductive portion and the second conductive portion, and a thickness thereof is smaller than a thickness of the first conductive portion and a thickness of the second conductive portion;
the first conductive portion is connected with the deformable plate; the second conductive portion is connected with the first electrode plate.

Preferably, further including a second insulating piece, the conductive plate is fixed on the top cover plate through the second insulating piece.

Preferably, further including a fixing piece, a fixing piece fitting portion is disposed on the second insulating piece is provided with a fixing piece fitting portion, the fixing piece is connected and fitted with the fixing piece fitting portion, and the second insulating piece is fixed on the top cover plate through the fixing piece.

Preferably, the fixing piece includes a fixing portion connected with the top cover plate, and a clamping portion bended from the fixing portion and extending toward a direction away from the top cover plate, and the clamping portion is clamped into the fixing piece fitting portion.

A second aspect of the present application provides a battery module, including of any one of the above-mentioned secondary battery, the secondary batteries are connected with each other in series.

The technical solution provided by the present application can reach the following beneficial effect:

In the secondary battery provided by the present application, when the pressure in the secondary battery exceeds the reference pressure, the deformable plate can deform so as to interrupt the electrical connection state with the first electrode plate, and the deformable plate after deforming is electrically connected with the connecting piece, so that the first terminal is electrically connected with the second terminal. Therefore, the secondary battery not only can solve the overcharging problem, but also can be regarded as a wire so as to keep the whole battery module still be in connection state, even though the battery module adopts the serial connection manner, thus, even if the vehicle is in moving, it will not be suddenly shut down, so as to improve safety of the vehicle.

It should be understood that, the above general description and the following detailed description are merely exemplary, which cannot limit the present application

### BRIEF DESCRIPTION OF DRAWINGS

FIG. 1 is a structural schematic diagram of a secondary battery according to an embodiment provided by the present application;
FIG. 2 is an explosive view of a secondary battery according to an embodiment provided by the present application;
FIG. 3 is a sectional view along A-A line in FIG. 1;
FIG. 3a is a structural schematic diagram of a secondary battery according to another embodiment provided by the present application;
FIG. 3b is a structural schematic diagram of a secondary battery according to still another embodiment provided by the present application;
FIG. 4 is a partial schematic diagram of a secondary battery provided by FIG. 3 according to an embodiment;
FIG. 4a is a partial schematic diagram of a secondary battery provided by FIG. 3a according to an embodiment;
FIG. 5 is a structural schematic diagram of a deformable plate of a secondary battery according to an embodiment provided by the present application;
FIG. 6 is a structural schematic diagram of a conductive plate of a secondary battery according to an embodiment provided by the present application;
FIG. 7 is another partial structural schematic diagram of a secondary battery provided by FIG. 3a according to an embodiment;
FIG. 8 is a structural schematic diagram of a fixing piece and an insulating piece of a secondary battery according to an embodiment provided by the present application.

### Reference signs:

- 10 -: top cover plate;
- 20 -: first terminal;
201 - terminal body;
202 - extending portion;
- 21 -: second conductive block;
- 22 -: third insulating piece;
- 23 -: fourth insulating piece;
- 24 -: second sealing piece;
- 30 -: second terminal;
- 31 -: third conductive block;
- 32 -: fifth insulating piece;
- 33 -: sixth insulating piece;
- 34 -: third sealing piece;
- 40 -: connecting piece;
- 41 -: first insulating piece;
- 42 -: first conductive block;
- 50 -: resistance piece;
- 70 -: deformable plate;
701 - deformable portion;
702 - first protrusion;
703 - second protrusion;
704 - connecting portion;
705 - mounting embossment;
- 71 -: conductive plate;
711 - first conductive portion;
712 - thickness reducing area;
713 - second conductive portion;
714 - first ventilating hole;
715 - second ventilating hole;
- 72 -: second insulating piece;
721 - third through-hole;
722 - fourth through-hole;
- 73 -: fixing hole;
- 74 -: first sealing piece;

The accompanying drawings herein are incorporated into the description and form a part thereof, which show embodiments of the present application, and are used to explain the principle of the present application together with the description.

### DESCRIPTION OF EMBODIMENTS

The present application will be described in further detail with reference to the following embodiments and the accompanying drawings.

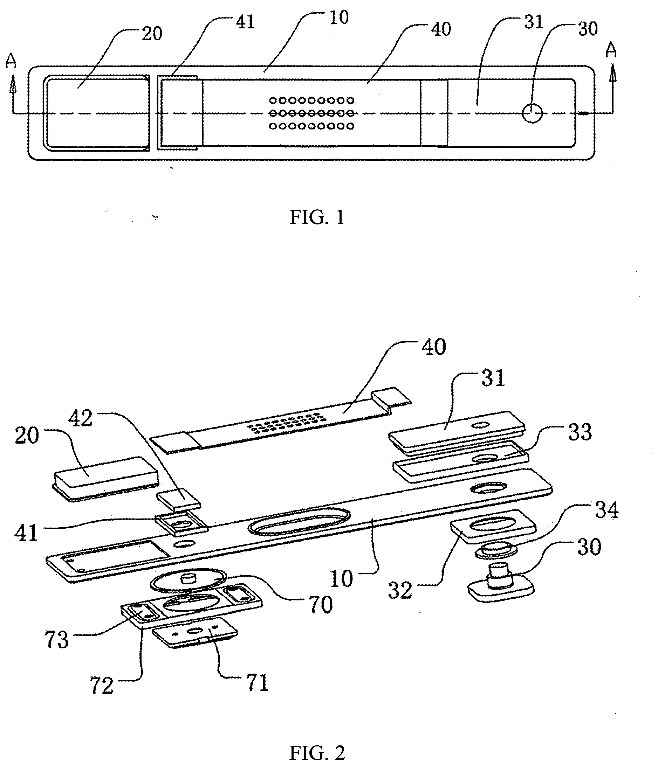

As shown from FIG. 1 to FIG. 8, embodiments of the present application provide a secondary battery, including a first terminal 20, a second terminal 30, a top cover plate 10, an electrode assembly (not shown in figures), a connecting piece 40 and a deformable plate 70, the secondary battery also includes a housing (not shown in figures). The electrode assembly includes a first electrode plate, a second electrode plate and a separator between the first electrode plate and the second electrode plate. The top cover plate 10 seals the housing, they surround to form accommodating space. The deformable plate 70 can be arranged on at least one of the top cover plate 10, the housing, the first terminal 20, and the second terminal 30. At least one of the first terminal 20 and the second terminal 30 is electrically insulated from the top cover plate 10, that is, the first terminal 20 and the second terminal 30 can be both electrically insulated from the top cover plate 10, or only one of them can be electrically insulated from the top cover plate 10; the connecting piece 40 is electrically connected with the second terminal 30. In a normal state, the first electrode plate is electrically connected with the first terminal 20 through the deformable plate 70, the second electrode plate is electrically connected with the second terminal 30; when the pressure in the secondary battery exceeds a reference pressure, the deformable plate 70 can deform so as to interrupt the electrical connection state in between with the first electrode plate, and the deformable plate 70 after deforming is electrically connected with the connecting piece 40, so that the first terminal 20 is electrically connected with the second terminal 30.

In the above embodiment, a connecting piece 40 is added, an end of the connecting piece 40 is electrically connected with the second terminal 30, when an internal short circuit occurs in the secondary battery, and the internal pressure exceeds the reference pressure, the deformable plate 70 can deform so as to interrupt the electrical connection state in between with the first electrode plate, and the deformable plate 70 after deforming is electrically connected with the connecting piece 40, so that the first terminal 20 is electrically connected with the second terminal 30. Therefore, deforming the deformable plate 70 not only achieves disconnection of the internal circuit in a malfunctioned secondary battery, but also achieves the electrical connection between the deformable plate 70 and the connecting piece 40, so that the first terminal 20 of the secondary battery is electrically conducted with the second terminal 30 of the secondary battery through the connecting piece 40, even though the battery module adopts the serial connection manner, the malfunctioned secondary battery can be regarded as a wire so as to keep the whole battery module still be in connection state, thus, even if the vehicle is moving, it will not be suddenly shut down, so as to improve safety of the vehicle.

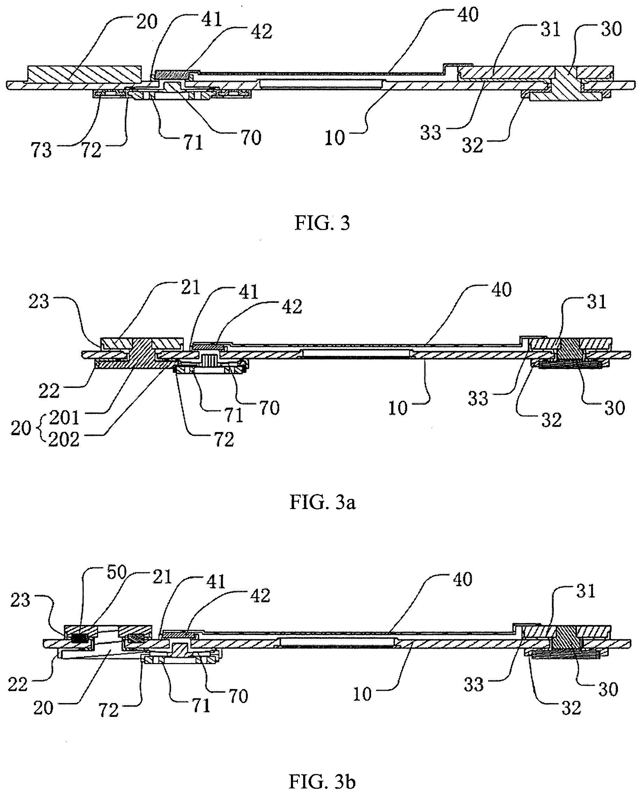

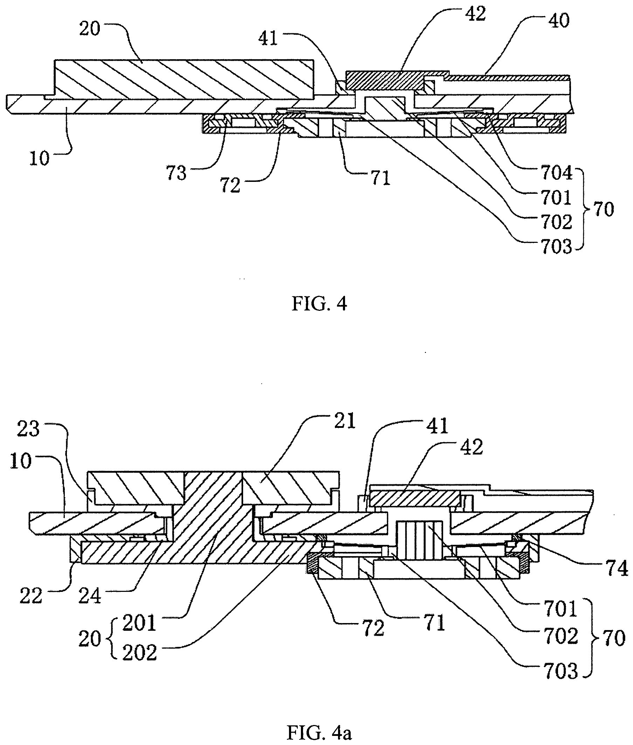

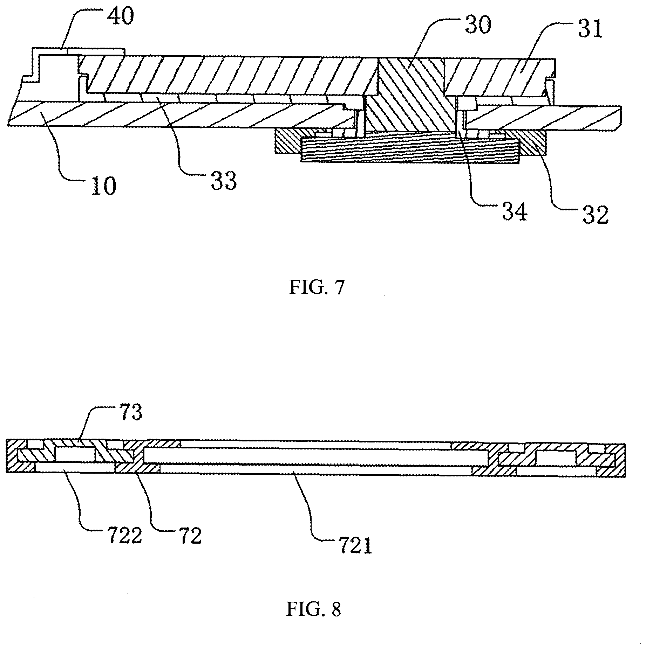

Generally, the first terminal 20 and the second terminal 30 are respectively mounted at the top cover plate 10, either the first terminal 20 or the second terminal 30 electrically connected with the top cover plate 10 can be directly connected with the top cover plate 10, or be connected with the top cover plate 10 through a conductive structure. For ease of electrical connection between the secondary battery and an external device, both the first terminal 20 and the second terminal 30 can protrude from the top cover plate 10, particularly when being electrically insulated from the top cover plate 10, the end electrically insulated therefrom protrudes from the top cover plate 10, for example the second terminal 30 shown in FIG. 3 protrudes from the top cover plate 10, the first terminal 20 shown in FIG. 3a protrudes from the top cover plate 10. When the first terminal 20 or the second terminal 30 protrudes from the top cover plate 10, in order to guarantee the sealing between the first terminal 20 or the second terminal 30 and the top cover plate 10, generally, the sealing is achieved through a sealing piece or sealant, as shown in FIG. 4a, the first terminal 20 is sealed with the top cover plate 10 through a second sealing piece 24; as shown in FIG. 7, the second terminal 30 is sealed with the top cover plate 10 through a third sealing piece 34, the second sealing piece 24 and the third sealing piece 34 can be a sealing ring or a sealing washer and so on, the second terminal 30 protrudes from the top cover plate 10, and is sealed with the top cover plate 10 through the third sealing piece 34.

The connecting piece 40 can be located outside the accommodating space, that is, located at a side of the top cover plate 10 away from the electrode assembly, an end of the connecting piece 40 is electrically connected with the second terminal 30, the other end extends toward the first terminal 20.

In a first embodiment, the deformable plate 70 is connected with the top cover plate 10, the first terminal 20 is electrically connected with the top cover plate 10, particularly, as shown in FIGs. 1-3, 4, 7, the top cover plate 10 is provided with a first through-hole, the deformable plate 70 is attached to the top cover plate 10 and seals the first through-hole, so that the top cover plate 10, the deformable plate 70 and the housing form a sealing cavity. The first terminal 20 is electrically connected with the top cover plate 10, preferably, the top cover plate 10 can be provided with a fourth groove, the first terminal 20 is inserted into the fourth groove; the second terminal 30 is electrically insulated from the top cover plate 10. The connecting piece 40 is electrically insulated from the top cover plate 10, and at least a part of the connecting piece 40 is opposite to the first through-hole. In a normal state, the first electrode plate is electrically connected with the first terminal 20 successively through the deformable plate 70 and the top cover plate 10; when the pressure in the secondary battery exceeds the reference pressure, the deformable plate 70 can deform so as to interrupt the electrical connection state in between with the first electrode plate, and the deformable plate 70 after deforming is electrically connected with the connecting piece 40 (the deformable plate 70 can directly contact and be electrically connected with the connecting piece 40; or a conductor can be provided between the deformable plate 70 and the connecting piece 40, an electrical connection is achieved through the conductor), so that the first terminal 20 is electrically connected with the second terminal 30 through the top cover plate 10, the deformable plate 70 and the connecting piece 40. The deformable plate 70 is directly arranged on the top cover plate 10, which can reduce the number of the components and facilitate processing and assembling.

In a second embodiment, the deformable plate 70 is attached to the first terminal 20, as shown in FIG. 3a and FIG. 4a, the first terminal 20 is provided with a first through-hole, the deformable plate 70 seals the first through-hole. At this time, when the connecting piece 40 is located at a side of the top cover plate 10 away from the first electrode plate, the top cover plate 10 is provided with a second through-hole, the second through-hole is opposite to the first through-hole. In a normal state, the first electrode plate is electrically connected with the first terminal 20 through the deformable plate 70; when the pressure in the secondary battery exceeds the reference pressure, the deformable plate 70 can deform so as to interrupt the electrical connection state in between with the first electrode plate, and the deformable plate 70 after deforming is electrically connected with the connecting piece 40, so that the first terminal 20 is electrically connected with the second terminal 30 through the deformable plate 70 and the connecting piece 40. When the secondary battery expands or is compressed and the top cover plate 10 is welded with the housing, the acting force generated will be applied to the top cover plate 10, if the deformable plate 70 is arranged on the top cover plate 10, the deformable plate 70 will deform as the deformation of the top cover plate 10, the deformation will generate stress in the deformable plate 70, the stress will reduce the sensitivity of the deformable plate 70, thereby affecting the safety of the secondary battery. In the present embodiment, the deformable plate 70 is attached onto the first terminal 20, which reduces the influence to the deformable plate 70 when the top cover plate 10 deforms, so that the sensitivity of the deformable plate 70 will not be reduced, which is advantage for improving the safety of the secondary battery.

For ease of the connection between the first terminal 20 and the deformable plate 70, the first terminal 20 includes a terminal body 201 and an extending portion 202 which are connected with each other, as shown in FIG. 3a and FIG. 4a, the first through-hole is provided at the extending portion 202. Generally, the terminal body 201 is sealed with the top cover plate 10, which can be achieved through a first sealing piece 74 or sealant and so on, when the first terminal 20 protrudes from the top cover plate 10, usually an end of the terminal body 201 protrudes from the top cover plate 10. The terminal body 201 and the extending portion 202 can be an integrated structure, or a separated structure.

In the second embodiment, the connecting manners between the first terminal 20, the second terminal 30 and the top cover plate 10 can be as follows:
Manner One, the second terminal 30 is electrically insulated from the top cover plate 10, the first terminal 20 can be electrically connected with the top cover plate 10 (as shown in FIG. 3b), or can be electrically insulated from the top cover plate 10 (as shown in FIG. 3a). Manner Two, the second terminal 30 is electrically connected with the top cover plate 10, the first terminal 20 is electrically insulated from the top cover plate 10. When the first terminal 20 is electrically connected with the top cover plate 10, the secondary battery can also include a resistance piece 50, as shown in FIG. 3b, at this time, the first terminal 20 is electrically connected with the top cover plate 10 through the resistance piece 50, adding the resistance piece 50 can reduce the current of the short circuit loop during nailing test of the secondary battery, so as to guarantee the safety of nailing. The range of the value of the resistance piece 50 is 1-100000 ohm.

The resistance piece 50 can be of a columnar-shaped structure, and can also be of a sheet-shaped structure. For further ease of the connection between the first terminal 20 and the external device, the secondary battery also includes a second conductive block 21, particularly when the resistance piece 50 is arranged, the resistance 50 is arranged between the top cover plate 10 and the second conductive block 21, the top cover plate 10 is electrically connected with the first terminal 20 through the resistance piece 50 and the second conductive block 21, when the resistance piece is of a columnar-shaped structure, the second conductive block 21 is electrically insulated from the top cover plate 10 through a fourth insulating piece 23 or insulating varnish or insulating adhesive, that is, the second conductive block 21 does not directly contact and form an electrical connection with the top cover plate 10, the resistance piece 50 is needed to achieve the electrical connection therebetween, after the resistance piece 50 goes through the fourth insulating piece 23, the two ends are connected with the second conductive block 21 and the top cover plate 10, respectively. When the resistance piece 50 is of a sheet-shaped structure, the second conductive block 21, the resistance piece 50 and the top cover plate 10 can be arranged by stacking, so as to increase the reliability of the connection.

Further, the top cover plate 10 is provided with a first groove, an end of the resistance piece 50 electrically connected with the top cover plate 10 is inserted into the first groove; and the second conductive block 21 is provided with a second groove, the other end of the resistance piece 50 is inserted into the second groove, so as to avoid the dislocation of the resistance piece 50; absolutely, it can also be that only the top cover plate 10 is provided with the first groove, or the second conductive block 21 is provided with the second groove. In the second embodiment, the accommodating space surrounded by the top cover plate 10 and the housing includes a first cavity for accommodating the electrode assembly, and a second cavity providing deforming space for the deformable plate 70, that is, the deformable plate 70 separates the accommodating space into the first cavity and the second cavity, the first cavity is not communicated with the second cavity, so that the deformable plate 70 can deform when the pressure in the secondary battery exceeds the reference pressure.

Specifically, the first cavity can be sealed with the second cavity through the first sealing piece 74 or sealant and so on, the first sealing piece 74 is arranged along the periphery of the deformable plate 70. When using a first sealing piece 74, the first sealing piece 74 can be connected and sealed between the extending portion 202 and the top cover plate 10, or the first sealing piece 74 is connected and sealed between the deformable plate 70 and the top cover plate 10. The first sealing piece 74 has a first sealing surface contacting and sealing the top cover plate 10, and a second sealing surface contacting and sealing the extending portion 202 or the deformable plate 70, generally, the first sealing surface is opposite to the second sealing surface in the height direction of the top cover plate 10; the first sealing surface can also be opposite to the second sealing surface in a direction perpendicular to the height direction of the top cover plate 10, which achieves side sealing, for example, the extending portion 202 or the deformable plate 70 protrudes into the second through-hole, the first sealing piece 74 is arranged between the inner wall of the second through-hole and the extending portion 202 or the deformable plate70; absolutely, the first sealing surface and the second sealing surface can be opposite both in the height direction of the top cover plate 10, and in the direction perpendicular to the height direction of the top cover plate 10 at the same time. In the present embodiment, in order to avoid the situation that pressure of the second cavity prevents the deformable plate 70 from deforming, the top cover plate 10 is also provided with an air outlet, the air outlet is opposite to the deformable plate 70, and penetrates along the thickness direction of the top cover plate 10.

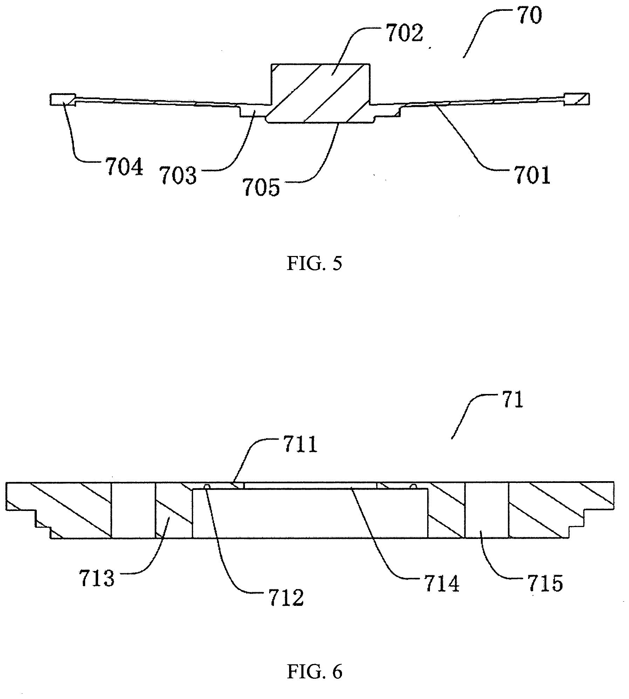

In each above-mentioned embodiment, the structure of the deformable plate 70 is shown as FIG. 5, the deformable plate 70 includes a deformable portion 701 and a first protrusion 702, the deformable portion 701 is of sheet-shaped ring structure, in the first embodiment, the edge thereof is connected with the top cover plate 10 (as shown in FIG. 3), in the second embodiment, the edge thereof is connected with the first terminal 20 (as shown in FIG. 3a). The first protrusion 702 is connected with the deformable portion 701, generally, the first protrusion 702 is connected with the central area of the deformable portion 701, and protrudes in the direction of the connecting piece 40, and is opposite to the part of the connecting piece 40 opposite to the first through-hole. Thus, in a normal state, in the first embodiment, the first electrode plate is electrically connected with the first terminal 20 successively through the deformable portion 701 and the top cover plate 10; in the second embodiment, the first electrode plate is electrically connected with the first terminal 20 through the deformable portion 701. Adding the first protrusion 702 can reduce the distance between the deformable plate 70 and the connecting piece 40 in the deforming direction of the deformable plate 70, so that the deformable plate 70 can quickly contact with the connecting piece 40 when over-charging occurs. In the second embodiment, the first protrusion preferably protrudes into the second through-hole, so as to further reduce the contacting path between the deformable plate 70 and the connecting piece 40.

In order to reduce the deforming extent of the deformable plate 70, and to guarantee the reliability of the connection between the deformable plate 70 and the first electrode plate, the deformable plate 70 also includes a second protrusion 703, the second protrusion 703 is connected with the deformable portion 701, and protrudes towards the direction of the first electrode plate, in a normal state, the deformable portion 701 is electrically connected with the first electrode plate through the second protrusion 703.

Generally, since the connecting piece 40 and the first electrode plate are of a plane structure, therefore, the end surface of the first protrusion 702 and the end surface of the second protrusion 703 are of a plane structure accordingly, so as to increase the contacting area between the deformable plate 70 and the first electrode plate and between the deformable plate 70 after deforming and the connecting piece 40.

The deformable portion 701 can be wholly located in the first through-hole, and can also be connected with the end portion of the first through-hole, preferably, the edge of the deformable portion 701 is connected with the inner wall of the first through-hole, so as to shorten the deforming extent of the deformable plate 70, and at the same time, also guarantee the reliability of the connection with the first electrode plate and the connecting piece 40 respectively before and after deforming.

Further, In order to guarantee the reliability of the connection between the deformable plate 70 and the top cover plate 10, the edge of the deformable portion 701 is also provided with a connecting portion 704, the thickness of the connecting portion 704 is larger than the thickness of the deformable portion 701, the thickness refers to the size along the deforming direction of the deformable plate 70, the deformable portion 701 is connected with the first through-hole through the connecting portion 704.

Preferably, the first through-hole is a ladder hole. In the first embodiment, it includes a big hole and a small hole, as shown in FIG. 4, the deformable portion 701 is connected with the big hole, when the connecting portion 704 is provided, the connecting portion 704 is connected with the big hole; the first protrusion 702 protrudes into the small hole, so as to limit the location of the deformable plate 70, which prevents the situation that, in a normal state, the deformable plate 70 miscontacts with the connecting piece 40 caused by the loose connection between the deformable plate 70 and the top cover plate 10. In the second embodiment, as shown in FIG. 4a, the connecting portion 704 is lapped and connected with the ladder surface of the ladder hole, when only the deformable portion 701 is provided, the deformable portion 701 can also be lapped and connected with the ladder surface, the above structure can limit the location of the deformable plate 70, and prevent the situation that, in a normal state, the deformable plate 70 cannot contact with the connecting piece 40 after deforming caused by the loose connection between the deformable plate 70 and the first terminal 20; generally, in the projection along the axial direction of the first through-hole, the edge of the second through-hole is located in the deformable portion 701, particularly when the first protrusion 702 protrudes into the second through-hole, which can prevent the situation that, in a normal state, the deformable plate 70 miscontacts with the connecting piece 40 caused by the loose connection between the deformable plate 70 and the first terminal 20.

For convenience of the connection, the secondary battery also includes a conductive plate 71, as shown in FIG. 4, in a normal state, in the first embodiment, the first electrode plate is electrically connected with the first terminal 20 successively through the conductive plate 71, the deformable plate 70 and the top cover plate 10, in the second embodiment, the first electrode plate is electrically connected with the first terminal 20 successively through the conductive plate 71 and the deformable plate 70; when the pressure in the secondary battery exceeds the reference pressure, the deformable plate 70 can deform to disconnect the conductive plate 71, so as to interrupt the electrical connection state between the first terminal 20 and the first electrode plate, and it is convenient for processing and assembling through adding the conductive plate 71.

Generally, the conductive plate 71 is provided with a ventilating hole, the ventilating hole is opposite to the deformable plate 70, for example, in FIG. 6, a first ventilating hole 714 or a second ventilating hole 715, the first ventilating hole 714 and the second ventilating hole 715 can also be provided at the same time. The first ventilating hole 714 and the second ventilating hole 715 penetrate the conductive plate 71 in the deforming direction of the deformable plate 70, so that the air in the secondary battery can travel to the deformable plate 70, so as to deform the deformable plate 70. When the deformable portion 701 is provided, in order to guarantee that the air generated during short circuit can quickly arrive at the deformable portion 701, the second ventilating hole 715 is opposite to the deformable portion 701.

Specifically, as shown in FIG. 6, the conductive plate 71 includes a first conductive portion 711, a second conductive portion 713 and a thickness reducing area 712, the thickness reducing area 712 is located between the first conductive portion 711 and the second conductive portion 713, and the thickness thereof is smaller than the thickness of the first conductive portion 711 and the thickness of the second conductive portion 713; the first conductive portion 711 is connected with the deformable plate 70, when the second protrusion 703 is provided, the first conductive portion 711 is directly connected with the second protrusion 703; the second conductive portion 713 is connected with the first electrode plate. At this time, the deformable plate 70 is electrically connected with the first electrode plate through the first conductive portion 711, the thickness reducing area 712 and the second conductive portion 713. Through arranging the thickness reducing area 712, at the same time connecting the first conductive portion 711 with the deformable plate 70 and electrically connecting the second conductive portion 713 with the first electrode plate, when the deformable plate 70 deforms, the conductive plate 71 can be broken at the thickness reducing area 712, so as to quickly achieve the disconnection in the secondary battery. Generally, the thickness of the first conductive portion 711 and the thickness reducing area is smaller than the back-end of the second conductive portion 713, which is advantage for breaking of the thickness reducing area 712.

Further, in order to break the conductive plate 71 under a smaller tension, the thickness reducing area 712 can be provided with an indentation or a disconnecting portion, or only provided with one of the indentation and the disconnecting portion, when a disconnecting portion is provided, the first conductive portion 711 is disconnected from the second conductive portion 713 at the disconnecting portion.

Generally, the first conductive portion 711 is also provided with a mounting hole, the deformable plate 70 is provided with an mounting embossment 705, the mounting embossment 705 can be connected with the second protrusion 703, the mounting embossment 705 is inserted into the mounting hole, so as to guarantee the connection accuracy between the conductive plate 71 and the deformable plate 70, further, the conductive plate 71 can be broken under the effect of the preset tension. The mounting hole can be a blind-hole or a through-hole, when being a through-hole, the mounting hole and the first ventilating hole 714 can be a same through-hole.

In order to prevent the conductive plate 71 from directly contacting with the top cover plate 10 to form an electrical connection, the conductive plate 71 is insulated from the top cover plate 10 through insulating structure, insulating adhesive or insulating varnish at the contacting place, the insulating structure can be the second insulating piece 72 shown in FIG. 4 and FIG. 4a, the second insulating piece 72 is located between the conductive plate 71 and the deformable plate 70, the structure of the second insulating piece 72 is shown in FIG. 8, which is provided with a third through-hole 721, the deformable plate 70, the third through-hole 721 and the first conductive portion 711 are opposite to each other.

In order to well fix the conductive plate 71 and guarantee that the deformable plate 70 can be electrically disconnected from it quickly after deforming, in the first embodiment, the conductive plate 71 can be fixed at the top cover plate 10 through the second insulating piece 72, in the second embodiment, the conductive plate 71 can be fixed at the first terminal 20 through the second insulating piece 72, in this way, the second insulating piece 72 has the functions of insulating and fixing at the same time, so as to save the number of components, and simplify the assembling process.

In the first embodiment, the second insulating piece 72 can be fixed with the top cover plate 10 by the manner of adhesive connection, clamping connection and so on, since the second insulating piece 72 is usually made of non-metal material, the top cover plate 10 is made of metal material, for ease of connection therebetween, the secondary battery also includes a fixing piece 73, the second insulating piece 72 is provided with a fixing piece fitting portion, the fixing piece 73 is connected and fitted with the fixing piece fitting portion, the second insulating piece 72 is fixed at the top cover plate 10 through the fixing piece 73, the fixing manner can be welding, riveting or bolt connection.

As shown in FIG. 8, the fixing piece 73 includes a fixing portion connected with the top cover plate 10, and a clamping portion which bends from the fixing portion and extends in the direction away from the top cover plate 10, the clamping portion is clamped into the fixing piece fitting portion. The clamping structure is used to achieve the connection between the fixing piece 73 and the second insulating piece 72, for convenient mounting.

For ease of the fixing operation of the fixing piece 73 with the top cover plate 10, the second insulating piece 72 is also provided with a fourth through-hole 722, the fourth through-hole 722 penetrates through the second insulating piece 72 along the direction of the top cover plate 10 pointing to the second insulating piece 72, and the fourth through-hole 722 is opposite to the fixing piece 73.

Number of the clamping portion can be one or two, when there are two, the clamping portions respectively extend from opposite ends of the fixing portion, the clamping portions are respectively clamped into opposite sides of the fixing piece fitting portion.

There can be one or more groups of fixing piece 73 and fixing piece fitting portion, for example two groups, three groups or more groups, generally, two groups of the fixing piece 73 and the fixing piece fitting portion are provided, which are opposite to the axis of the fourth through-hole, the two groups of the fixing piece 73 and the fixing piece fitting portion are respectively located at two sides of the first through-hole.

In the second embodiment, the connecting manner between the second insulating piece 72 and the first terminal 20 can adopt the structure of the fixing piece 73 as mentioned above.

In the above embodiments, as shown in FIG. 4, the secondary battery also includes a first conductive block 42, an end of the connecting piece 40 opposite to the first through-hole is connected with the first conductive block 42, the first conductive block 42 is opposite to the first through-hole, the first conductive block 42 does not directly contact with the top cover plate 10, so as to further shorten the time for the deformable plate 70 to be electrically connected with the connecting piece 40 after deforming.

Insulating adhesive or the first insulating piece 41 is provided between the first conductive block 42 and the top cover plate 10, the first insulating piece 41 is provided with a fifth through-hole, the first conductive block 42, the fifth through-hole and the first through-hole are opposite to each other.

In order to prevent that the deformable plate 70 after deforming has a poor contact with the connecting piece 40 caused by the location offset of the first conductive block 42, the first insulating piece 41 is provided with a third groove, the first conductive block 42 is inserted into the third groove, the first insulating piece 41 is mounted at the top cover plate 10.

Since only one end of the connecting piece 40 is connected with the second terminal 30, which is easy to cause a cantilever structure, the impact force of the deformable plate 70 after deforming will make the connecting piece away from an end of the second terminal 30, and move towards a direction away from the top cover plate 10, thereby leading to a poor contact between the deformable plate 70 after deforming and the connecting piece 40, therefore, the end of the connecting piece 40 away from the second terminal 30 is connected with the top cover plate 10 through the first insulating piece 41, the connecting manner can be adhesive connection, clamping connection and so on.

When the second terminal 30 is electrically insulated from the top cover plate 10, for ease of the electrical connection between the connecting piece 40 and the second terminal 30, the secondary battery also includes a third conductive block 31, the third conductive block 31 is electrically insulated from the top cover plate 10, which can be insulated through a sixth insulating piece 33, insulating adhesive or insulating varnish.

The first terminal 20 or the second terminal 30 is insulated from the top cover plate 1o, which can be achieved through the insulating piece, insulating adhesive or insulating varnish, as shown in FIG. 3a and FIG. 3b, the first terminal 20 is electrically insulated from the top cover plate 10 through the third insulating piece 22; as shown in FIG. 7, the second terminal 30 is electrically insulated from the top cover plate 10 through the fifth insulating piece 32. The third insulating piece 22 and the second insulating piece 72 can be an integrated structure.

In each above embodiment, generally, the first terminal 20 is a positive terminal, the second terminal 30 is a negative terminal, correspondingly, the first electrode plate is a positive electrode, the second electrode plate is a negative electrode, particularly, when the first terminal 20 is electrically connected with the top cover plate 10, corrosion on the housing by the electrolyte can be prevented. Absolutely, it is also possible that the first terminal 20 is a negative terminal, the second terminal 30 is a positive terminal, correspondingly, the first electrode plate is a negative electrode, the second electrode plate is a positive electrode.

The present application also provides a battery module, including the secondary battery provided in any one of the above-mentioned embodiments. There are multiple secondary batteries provided, the secondary batteries can be connected in parallel or in series, particularly when connected in series, adopting the secondary battery of any one of the above-mentioned embodiments, even an accident causes the deformable plate 70 be activated will not lead to the whole battery module be interrupted, so as to guarantee the stability of the battery module.

## Claims

1. A secondary battery, comprises a first terminal (20), a second terminal (30), a top cover plate (10), an electrode assembly, a connecting piece (40) and a deformable plate (70), wherein the electrode assembly comprises a first electrode plate, a second electrode plate and a separator between the first electrode plate and the second electrode plate; at least one of the first terminal (20) and the second terminal (30) is insulatedly arranged from the top cover plate (10); the connecting piece (40) is electrically connected with the second terminal (30);
**characterized in that**,
in a normal state, the first electrode plate is electrically connected with the first terminal (20) through the deformable plate (70), and the second electrode plate is electrically connected with the second terminal (30);
when an internal pressure of the secondary battery exceeds a reference pressure, the deformable plate (70) deforms so as to interrupt an electrical connection with the first electrode plate, and then the deformable plate (70) after deforming is electrically connected with the connecting piece, so that the first terminal (20) is electrically connected with the second terminal (30).

2. The secondary battery according to claim 1, **characterized in that**,
the second terminal (30) is insulated from the top cover plate (10);
the first terminal (20) is electrically connected with the top cover plate (10), the connecting piece (40) is insulated from the top cover plate (10);
a first through-hole is disposed on the top cover plate (10);
the deformable plate (70) is attached to the top cover plate (10), and seals the first through-hole;
in a normal state, the first electrode plate is electrically connected with the first terminal (20) through the deformable plate (70) and the top cover plate (10), successively;
the connecting piece (40) is located at a side of the top cover plate (10) away from the electrode assembly, an end of the connecting piece (40) is electrically connected with the second terminal (30), and the other end of the connecting piece, at least a part of which is disposed opposite to the first through-hole, extends toward the first terminal (20).

3. The secondary battery according to claim 2, **characterized in that**, the deformable plate (70) comprises a deformable portion (701) and a first protrusion (702),
the deformable portion (701) is a sheet-shaped ring structure, and an edge thereof is connected with the top cover plate (10);
the first protrusion (702) is connected with the deformable portion (701), protrudes in a direction toward the connecting piece, and is disposed opposite to the part of the connecting piece (40) opposite to the first through-hole.

4. The secondary battery according to claim 3, **characterized in that**, the first through-hole is a ladder hole comprising a big hole and a small hole, an edge of the deformable portion (701) is connected with an inner wall of the big hole; the first protrusion (702) extends into the small hole.

5. The secondary battery according to claim 3, **characterized in that**, the deformable plate (70) further comprises a second protrusion (703), the second protrusion (703) is connected with the deformable portion (701), and protrudes toward a direction away from the first protrusion (702), in a normal state, the deformable portion (701) is electrically connected with the first electrode plate through the second protrusion (703).

6. The secondary battery according to any one of claims 1-5, **characterized in that**, the second battery further comprises a conductive plate (71),
in a normal state, the first electrode plate is electrically connected with the first terminal (20) through the conductive plate (71) and the deformable plate (70), successively;
when the internal pressure of the secondary battery exceeds the reference pressure, the deformable plate (70) deforms to interrupt the conductive plate (71), so as to interrupt the electrical connection between the first terminal (20) and the first electrode plate.

7. The secondary battery according to claim 6, **characterized in that**, the conductive plate (71) comprises a first conductive portion (711), a second conductive portion (713) and a thickness reducing area (712),
the thickness reducing area (712) is located between the first conductive portion (711) and the second conductive portion (713), and a thickness thereof is smaller than a thickness of the first conductive portion (711) and a thickness of the second conductive portion (713);
the first conductive portion (711) is connected with the deformable plate (70); the second conductive portion (713) is connected with the first electrode plate.

8. The secondary battery according to claim 6, **characterized in that**, the second battery further comprises a second insulating piece (72), the conductive plate (71) is fixed on the top cover plate (10) through the second insulating piece (72).

9. The secondary battery according to claim 8, **characterized in that**, the second battery further comprises a fixing piece, a fixing piece fitting portion is disposed on the second insulating piece (72), the fixing piece is connected and fitted with the fixing piece fitting portion, and the second insulating piece (72) is fixed on the top cover plate (10) through the fixing piece.

10. The secondary battery according to claim 9, **characterized in that**, the fixing piece comprises a fixing portion connected with the top cover plate (10), and a clamping portion bended from the fixing portion and extending toward a direction away from the top cover plate (10), and the clamping portion is clamped into the fixing piece fitting portion.

11. A battery module, **characterized in that**, the batter module comprises a plurality of secondary batteries according to any one of claims 1-10, and the secondary batteries are connected with each other in series.

## Patentansprüche

1. Sekundärzelle, die einen ersten Anschluss (20), einen zweiten Anschluss (30), eine obere Deckplatte (10), eine Elektrodenanordnung, ein Verbindungsstück (40) und eine verformbare Platte (70) umfasst, wobei die Elektrodenanordnung eine erste Elektrodenplatte, eine zweite Elektrodenplatte und zwischen der ersten Elektrodenplatte und der zweiten Elektrodenplatte einen Separator umfasst; wobei der erste Anschluss (20) und/oder der zweite Anschluss (30) von der oberen Deckplatte (10) isoliert angeordnet sind; wobei das Verbindungsstück (40) mit dem zweiten Anschluss (30) elektrisch verbunden ist;
**dadurch gekennzeichnet, dass**
in einem Normalzustand die erste Elektrodenplatte über die verformbare Platte (70) mit dem ersten Anschluss (20) elektrisch verbunden ist und die zweite Elektrodenplatte mit dem zweiten Anschluss (30) elektrisch verbunden ist;
sich die verformbare Platte (70) verformt, um eine elektrische Verbindung mit der ersten Elektrodenplatte zu unterbrechen, und die verformbare Platte (70) daraufhin nach der Verformung mit dem Verbindungsstück elektrisch verbunden wird, so dass der erste Anschluss (20) mit dem zweiten Anschluss (30) elektrisch verbunden wird, wenn ein Innendruck der Sekundärzelle einen Referenzdruck übersteigt.

2. Sekundärzelle nach Anspruch 1, **dadurch gekennzeichnet, dass**
der zweite Anschluss (30) von der oberen Deckplatte (10) isoliert ist;
der erste Anschluss (20) mit der oberen Deckplatte (10) elektrisch verbunden ist, das Verbindungsstück (40) von der oberen Deckplatte (10) isoliert ist;
in der oberen Deckplatte (10) ein erstes Durchgangsloch angeordnet ist;
die verformbare Platte (70) an der oberen Deckplatte (10) angebracht ist und das erste Durchgangsloch abdichtet;
in einem Normalzustand die erste Elektrodenplatte über die verformbare Platte (70) und die obere Deckplatte (10) nacheinander mit dem ersten Anschluss (20) elektrisch verbunden ist;
sich das Verbindungsstück (40) auf einer von der Elektrodenanordnung entfernten Seite der oberen Deckplatte (10) befindet, ein Ende des Verbindungsstücks (40) mit dem zweiten Anschluss (30) elektrisch verbunden ist und sich das andere Ende des Verbindungsstücks, von dem wenigstens ein Teil dem ersten Durchgangsloch gegenüberliegend angeordnet ist, in Richtung des ersten Anschlusses (20) erstreckt.

3. Sekundärzelle nach Anspruch 2, **dadurch gekennzeichnet, dass** die verformbare Platte (70) einen verformbaren Abschnitt (701) und einen ersten Vorsprung (702) umfasst, wobei
der verformbare Abschnitt (701) eine plattenförmige Ringstruktur ist und ein Rand davon mit der oberen Deckplatte (10) verbunden ist;
der erste Vorsprung (702) mit dem verformbaren Abschnitt (701) verbunden ist, in einer Richtung zu dem Verbindungsstück vorsteht und dem Teil des Verbindungsstücks (40), der dem ersten Durchgangsloch gegenüberliegt, gegenüberliegend angeordnet ist.

4. Sekundärzelle nach Anspruch 3, **dadurch gekennzeichnet, dass** das erste Durchgangsloch ein Leiterloch ist, das ein großes Loch und ein kleines Loch umfasst, wobei ein Rand des verformbaren Abschnitts (701) mit einer Innenwand des großen Lochs verbunden ist; wobei sich der erste Vorsprung (702) in das kleine Loch erstreckt.

5. Sekundärzelle nach Anspruch 3, **dadurch gekennzeichnet, dass** die verformbare Platte (70) ferner einen zweiten Vorsprung (703) umfasst, wobei der zweite Vorsprung (703) mit dem verformbaren Abschnitt (701) verbunden ist und in einer Richtung von dem ersten Vorsprung (702) weg vorsteht, wobei in einem Normalzustand der verformbare Abschnitt (701) über den zweiten Vorsprung (703) mit der ersten Elektrodenplatte elektrisch verbunden ist.

6. Sekundärzelle nach einem der Ansprüche 1-5, **dadurch gekennzeichnet, dass** die Sekundärzelle ferner eine leitfähige Platte (71) umfasst, wobei
in einem Normalzustand die erste Elektrodenplatte über die leitfähige Platte (71) und die verformbare Platte (70) nacheinander mit dem ersten Anschluss (20) elektrisch verbunden ist;
sich die verformbare Platte (70) verformt, um die leitfähige Platte (71) zu unterbrechen, um so die elektrische Verbindung zwischen dem ersten Anschluss (20) und der ersten Elektrodenplatte zu unterbrechen, wenn der Innendruck der Sekundärzelle den Referenzdruck übersteigt.

7. Sekundärzelle nach Anspruch 6, **dadurch gekennzeichnet, dass** die leitfähige Platte (71) einen ersten leitfähigen Abschnitt (711), einen zweiten leitfähigen Abschnitt (713) und einen Dickenverringerungsbereich (712) umfasst, wobei
sich der Dickenverringerungsbereich (712) zwischen dem ersten leitfähigen Abschnitt (711) und dem zweiten leitfähigen Abschnitt (713) befindet und eine Dicke davon kleiner als eine Dicke des ersten leitfähigen Abschnitts (711) und eine Dicke des zweiten leitfähigen Abschnitts (713) ist;
der erste leitfähige Abschnitt (711) mit der verformbaren Platte (70) verbunden ist; der zweite leitfähige Abschnitt (713) mit der ersten Elektrodenplatte verbunden ist.

8. Sekundärzelle nach Anspruch 6, **dadurch gekennzeichnet, dass** die Sekundärzelle ferner ein zweites Isolierstück (72) umfasst, wobei die leitfähige Platte (71) über das zweite Isolierstück (72) an der oberen Deckplatte (10) befestigt ist.

9. Sekundärzelle nach Anspruch 8, **dadurch gekennzeichnet, dass** die Sekundärzelle ferner ein Befestigungsstück umfasst, wobei an dem zweiten Isolierstück (72) ein Befestigungsstück-Einbauabschnitt angeordnet ist, wobei das Befestigungsstück mit dem Befestigungsstück-Einbauabschnitt verbunden und eingebaut ist und wobei das zweite Isolierstück (72) über das Befestigungsstück an der oberen Deckplatte (10) befestigt ist.

10. Sekundärzelle nach Anspruch 9, **dadurch gekennzeichnet, dass** das Befestigungsstück einen mit der oberen Deckplatte (10) verbundenen Befestigungsabschnitt und einen Klemmabschnitt, der von dem Befestigungsabschnitt gebogen ist und sich in einer Richtung von der oberen Deckplatte (10) weg erstreckt, umfasst und dass der Klemmabschnitt in den Befestigungsstück-Einbauabschnitt geklemmt ist.

11. Batteriemodul, **dadurch gekennzeichnet, dass** das Batteriemodul mehrere Sekundärzellen nach einem der Ansprüche 1-10 umfasst und dass die Sekundärzellen miteinander in Reihe geschaltet sind.

## Revendications

1. Batterie rechargeable comprenant une première borne (20), une seconde borne (30), une plaque de recouvrement supérieure (10), un ensemble d'électrodes, une pièce de connexion (40) et une plaque déformable (70), dans laquelle l'ensemble d'électrodes comprend une première électrode plane, une seconde électrode plane et un séparateur entre la première électrode plane et la seconde électrode plane ; au moins une de la première borne (20) et la seconde borne (30) est agencée de manière isolée de la plaque de recouvrement supérieure (10) ; la pièce de connexion (40) est connectée électriquement à la seconde borne (30) ;
**caractérisée en ce que**,
dans un état normal, la première électrode plane est connectée électriquement à la première borne (20) à travers la plaque déformable (70) et la seconde électrode plane est connectée électriquement à la seconde borne (30) ;
lorsqu'une pression interne de la batterie rechargeable dépasse une pression de référence, la plaque déformable (70) se déforme de manière à interrompre une connexion électrique à la première électrode plane, puis la plaque déformable (70) est connectée électriquement après déformation à la pièce de connexion de sorte que la première borne (20) est connectée électriquement à la seconde borne (30).

2. Batterie rechargeable selon la revendication 1, **caractérisée en ce que**
la seconde borne (30) est isolée de la plaque de recouvrement supérieure (10) ;
la première borne (20) est connectée électriquement à la plaque de recouvrement supérieure (10), la pièce de connexion (40) est isolée de la plaque de recouvrement supérieure (10) ;
un premier orifice traversant est disposé sur la plaque de recouvrement supérieure (10) ;
la plaque déformable (70) est reliée à la plaque de recouvrement supérieure (10) et scelle le premier orifice traversant ;
dans un état normal, la première électrode plane est connectée électriquement à la première borne (20) à travers la plaque déformable (70) et la plaque de recouvrement supérieure (10), successivement ;
la pièce de connexion (40) est située sur un côté de la plaque de recouvrement supérieure (10) à l'écart de l'ensemble d'électrodes, une extrémité de la pièce de connexion (40) est connectée électriquement à la seconde borne (30) et l'autre extrémité de la pièce de connexion dont au moins une partie est disposée à l'opposé du premier orifice traversant s'étend vers la première borne (20).

3. Batterie rechargeable selon la revendication 2, **caractérisée en ce que** la plaque déformable (70) comprend une portion déformable (701) et une première saillie (702), la portion déformable (701) est une structure annulaire en forme de feuille et un bord de celle-ci est connecté à la plaque de recouvrement supérieure (10) ;
la première saillie (702) est connectée à la portion déformable (701), fait saillie dans une direction vers la pièce de connexion et est disposée à l'opposé de la partie de la pièce de connexion (40) opposée au premier orifice traversant.

4. Batterie rechargeable selon la revendication 3, **caractérisée en ce que** le premier orifice traversant est un orifice en échelle comprenant un grand orifice et un petit orifice, un bord de la portion déformable (701) est connecté à une paroi interne du grand orifice ; la première saillie (702) s'étend dans le petit orifice.

5. Batterie rechargeable selon la revendication 3, **caractérisée en ce que** la plaque déformable (70) comprend en outre une seconde saillie (703), la seconde saillie (703) est connectée à la portion déformable (701) et fait saillie vers une direction à l'écart de la première saillie (702), dans un état normal, la portion déformable (701) est connectée électriquement à la première électrode plane à travers la seconde saillie (703).

6. Batterie rechargeable selon l'une quelconque des revendications 1 à 5, **caractérisée en ce que** la seconde batterie comprend en outre une plaque conductrice (71),
dans un état normal, la première électrode plane est connectée électriquement à la première borne (20) à travers la plaque conductrice (71) et la plaque déformable (70), successivement ;
lorsque la pression interne de la batterie rechargeable dépasse la pression de référence, la plaque déformable (70) se déforme pour interrompre la plaque conductrice (71) de manière à interrompre la connexion électrique entre la première borne (20) et la première électrode plane.

7. Batterie rechargeable selon la revendication 6, **caractérisée en ce que** la plaque conductrice (71) comprend une première portion conductrice (711), une seconde portion conductrice (713) et une zone de réduction d'épaisseur (712),
la zone de réduction d'épaisseur (712) est située entre la première portion conductrice (711) et la seconde portion conductrice (713), et une épaisseur de celle-ci est inférieure à une épaisseur de la première portion conductrice (711) et une épaisseur de la seconde portion conductrice (713) ;
la première portion conductrice (711) est connectée à la plaque déformable (70) ; la seconde portion conductrice (713) est connectée à la première électrode plane.

8. Batterie rechargeable selon la revendication 6, **caractérisée en ce que** la seconde batterie comprend en outre une seconde pièce isolante (72), la plaque conductrice (71) est fixée sur la plaque de recouvrement supérieure (10) à travers la seconde pièce isolante (72).

9. Batterie rechargeable selon la revendication 8, **caractérisée en ce que** la seconde batterie comprend en outre une pièce de fixation, une portion d'ajustement de pièce de fixation est disposée sur la seconde pièce isolante (72), la pièce de fixation est connectée à et ajustée avec la portion d'ajustement de pièce de fixation, et la seconde pièce isolante (72) est fixée sur la plaque de recouvrement supérieure (10) à travers la pièce de fixation.

10. Batterie rechargeable selon la revendication 9, **caractérisée en ce que** la pièce de fixation comprend une portion de fixation connectée à la plaque de recouvrement supérieure (10) et une portion de serrage pliée depuis la portion de fixation et s'étendant vers une direction à l'écart de la plaque de recouvrement supérieure (10), et la portion de serrage est serrée dans la portion d'ajustement de pièce de fixation.

11. Module de batteries, **caractérisé en ce que** le module de batteries comprend une pluralité de batteries rechargeables selon l'une quelconque des revendications 1 à 10, et les batteries rechargeables sont connectées l'une à l'autre en série.
